# EUROPÄISCHE PATENTSCHRIFT

(11) **EP 1 274 928 B1**
(45) Veröffentlichungstag und Bekanntmachung des Hinweises auf die Patenterteilung: **08.06.2005**
(21) Anmeldenummer: 01929541.9
(22) Anmeldetag: 11.04.2001
(51) Int. Cl.: F02C 6/12, F02B 37/013, F01D 25/24

(54) **TURBOLADER-EINRICHTUNG FÜR EINE BRENNKRAFTMASCHINE**
TURBOCHARGER DEVICE FOR AN INTERNAL COMBUSTION ENGINE
DISPOSITIF TURBOCOMPRESSEUR POUR UN MOTEUR A COMBUSTION INTERNE

(30) Priorität: 20.04.2000 DE 10019774
(43) Veröffentlichungstag der Anmeldung: 15.01.2003
(73) Patentinhaber: DaimlerChrysler AG, 70567 Stuttgart (DE); BorgWarner Inc., Auburn Hills, Michigan 48326-1782 (US)
(72) Erfinder: HUTER, Jürgen, 71554 Weissach (DE); WEBER, Siegfried, 70619 Stuttgart (DE); HOECKER, Patric, 76829 Landau (DE); PFLÜGER, Frank, 76351 Hochstetten (DE)
(74) Vertreter: Bickel, Michael
(86) Internationale Anmeldenummer: PCT/EP2001/004165
(87) Internationale Veröffentlichungsnummer: WO 2001/081744

(56) Entgegenhaltungen:
- DE-A- 19 700 662
- DE-A- 19 837 978
- US-A- 4 930 315
- US-A- 5 408 979
- US-A- 5 943 864

## Beschreibung

Die Erfindung betrifft eine Turbolader-Einrichtung für eine Brennkraftmaschine nach dem Oberbegriff des Anspruches 1.

Aus der Druckschrift DE 31 42 499 A1 ist eine Turbolader-Anordnung mit zwei Abgasturboladern unterschiedlicher Größe bekannt, die hintereinander liegend in Reihe angeordnet sind, wobei über steuerbare Ventile einer der Turbolader zu- bzw. abschaltbar ist. Die Steuerung der Ventile erfolgt auf elektronischem Wege in Abhängigkeit des jeweiligen Betriebszustandes der Brennkraftmaschine, wodurch eine optimale Leistungsentfaltung erreicht werden soll.

Eine vergleichbare Turbolader-Anordnung ist aus der Druckschrift WO 91/18192 bekannt, die ebenfalls zwei sequentiell hintereinander angeordnete Abgasturbolader zeigt, wobei in diesem Fall die Turbinen beider Lader über ein Waste-Gate mit absperrbarem Ventil überbrückt werden können.

Derartige Turboladeranordnungen benötigen üblicherweise einen verhältnismäßig großen Einbauraum, der insbesondere bei kleineren Fahrzeugen oftmals nicht zur Verfügung steht.

Der Erfindung liegt das Problem zugrunde, eine Turbolader-Einrichtung mit kompakter Bauweise zu schaffen.

Dieses Problem wird erfindungsgemäß bei einer Turbolader-Einrichtung mit den Merkmalen des Anspruches 1 gelöst.

Gemäß der Neuerung ist vorgesehen, dass am Turbinengehäuse ein gemeinsamer Abgas-Einströmkanal angeordnet ist, über den das Abgas der Brennkraftmaschine beiden Turbinen im Turbinengehäuse zuführbar ist. Von dem Abgas-Einströmkanal zweigen zwei Abgas-Kanalabschnitte ab, über die das Abgas jeweils einer Turbine zuführbar ist. Weiterhin ist ein Stellorgan vorgesehen, welches in der Abzweigung der Abgas-Kanalabschnitte vom Abgas-Einströmkanal angeordnet ist. Über das regel- oder steuerbare Stellorgan kann der Abgasmassenstrom zu zumindest einer Turbine eingestellt werden. Der Abgas-Einströmkanal, die beiden vom Abgas-Einströmkanal abzweigenden Kanalabschnitte sowie das Stellorgan sind in das Turbinengehäuse integriert, wodurch einerseits eine besonders raumsparende Anordnung realisiert werden kann und andererseits die Einrichtung einen modularen Charakter erhält, wodurch es möglich wird, den Einströmkanal, die Kanalabschnitte und das Stellorgan als austauschbare Einheit auszubilden.

Das Turbinengehäuse, in dem der Einströmkanal die beiden Kanalabschnitt und das Stellorgan angeordnet sind, kann entweder Teil nur eines Abgasturboladers sein oder aber Teil eines gemeinsamen Gehäuses beider Abgasturbolader sein.

Weiterhin ist vorgesehen, dass das Turbinengehäuse einen Anschlussflansch aufweist, über den die Turbolader-Einrichtung unverlierbar an den Abgasauslass der Brennkraftmaschine zu befestigen ist. Der Abgas-Einströmkanal ist hierbei im Bereich des Anschlussflansches angeordnet. Diese Ausführung bietet den Vorteil, dass die gesamte Turbolader-Einrichtung über den Anschlussflansch an der Brennkraftmaschine befestigt werden kann, wodurch der Aufwand für die Montage und Demontage der Einrichtung reduziert wird.

In bevorzugter Weiterbildung sind die beiden Abgasturbolader der Einrichtung unterschiedlich groß mit unterschiedlich hohem Massendurchsatz ausgebildet, wobei das Stellorgan in der Abzweigung der beiden jeweils einer Turbine zugeordneten Kanalabschnitte in der Weise geschaltet werden kann, dass bei kleinen Lasten bzw. Drehzahlen der dem größeren Abgasturbolader zugeordnete Kanalabschnitt gesperrt ist, wohingegen bei hohen Lasten bzw. Drehzahlen dieser Kanalabschnitt geöffnet ist. Die beiden Turbolader werden in dieser Weise optimal aufeinander abgestimmt, indem bei kleineren Drehzahlen vorrangig der kleinere Lader mit geringerer Trägheit und besserem Ansprechverhalten zum Tragen kommt, bei höherer Drehzahl dagegen vorrangig der größere Lader zum Einsatz kommt, welcher eine höhere Leistungsabgabe aufweist. Beide Lader zusammengenommen und in dieser Weise aufeinander abgestimmt ermöglichen es, insgesamt einen hohen Luftdurchsatz und einen etwa konstanten Drehmomentverlauf zu realisieren.

Schließlich kann es zweckmäßig sein, die beiden Luftführungskanäle, welche zum einen zwischen Verdichteraustritt eines ersten Verdichters und Verdichtereintritt eines zweiten Verdichters und zum anderen am Verdichteraustritt des zweiten Verdichters angeordnet sind, in einem austauschbaren Modul zusammenzufassen. Dieses Modul ist vorteilhaft unabhängig vom Turbinengehäuse ausgebildet, bildet zugleich jedoch einen Teil der Turbolader-Einrichtung. Die Austauschbarkeit des Moduls hat den Vorteil, dass die Variabilität der Einrichtung insbesondere im Hinblick auf die Anpassung an unterschiedliche Größenverhältnisse erhöht wird. Weiter kann die Anpassungsfähigkeit dadurch gesteigert werden, dass der Verdichteraustritt des ersten Verdichters und der Verdichtereintritt des zweiten Verdichters in parallelen Ebenen liegen; hierdurch wird eine weitere Vereinfachung bei der Montage und Demontage des Moduls an der Turbolader-Einrichtung erreicht. Es kann vorteilhaft sein, einen Verbindungskanal zwischen den beiden Luftführungskanälen vorzusehen, in welchem eine Bypass-Klappe angeordnet sein kann. Über den Verbindungskanal und die Bypass-Klappe kann ein Teil des Frischluftstromes am zweiten Verdichter vorbei geleitet werden, wodurch sich ein weiterer Freiheitsgrad für die Einstellung der Turbolader-Einrichtung ergibt, was insbesondere bei kleinvolumigen Motoren, beispielsweise für Personenkraftwagen, vorteilhaft sein kann. Die modulare Ausführung der zu einer Baueinheit zusammengefassten Luftführungskanäle ermöglicht es, Module mit und ohne Verbindungskanal vorzusehen bzw. entsprechende Module gegenseitig auszutauschen oder aber ein Modul ohne Verbindungskanal mit einem solchen auszurüsten bzw. aus einem derartigen Modul den Verbindungskanal zu entfernen. Module ohne Verbindungskanal werden insbesondere bei Nutzfahrzeugen eingesetzt.

Weitere Vorteile und zweckmäßige Ausführungsformen sind den weiteren Ansprüchen, der Figurenbeschreibung und den Zeichnungen zu entnehmen. Es zeigen:
- Fig. 1: eine perspektivische Ansicht einer erfindungsgemäßen Turbolader-Einrichtung,
- Fig. 2: eine Draufsicht auf die Einrichtung,
- Fig. 3: eine Vorderansicht der Einrichtung,
- Fig. 4: eine Rückansicht,
- Fig. 5: eine erste Seitenansicht,
- Fig. 6: eine zweite Seitenansicht.

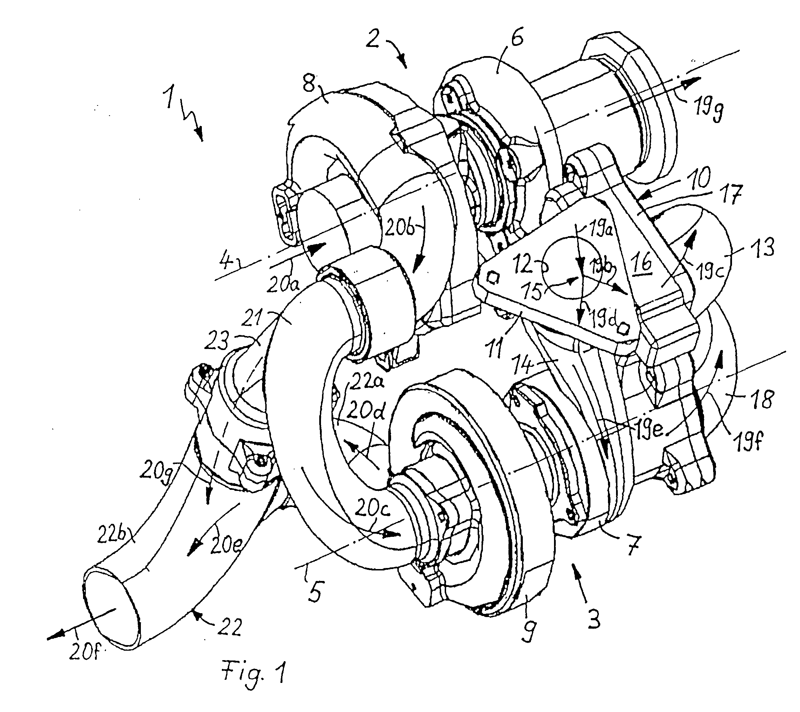

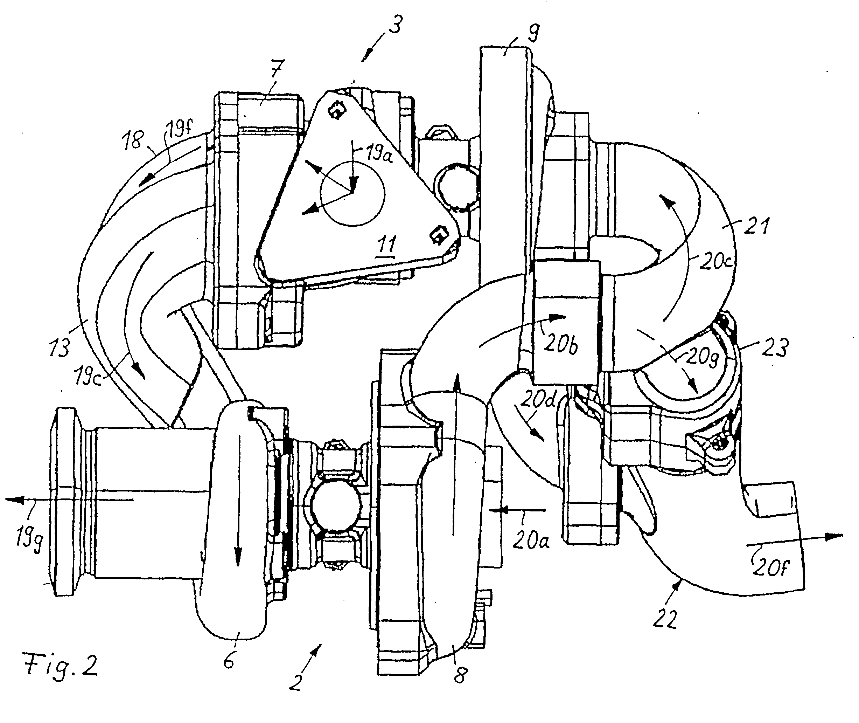

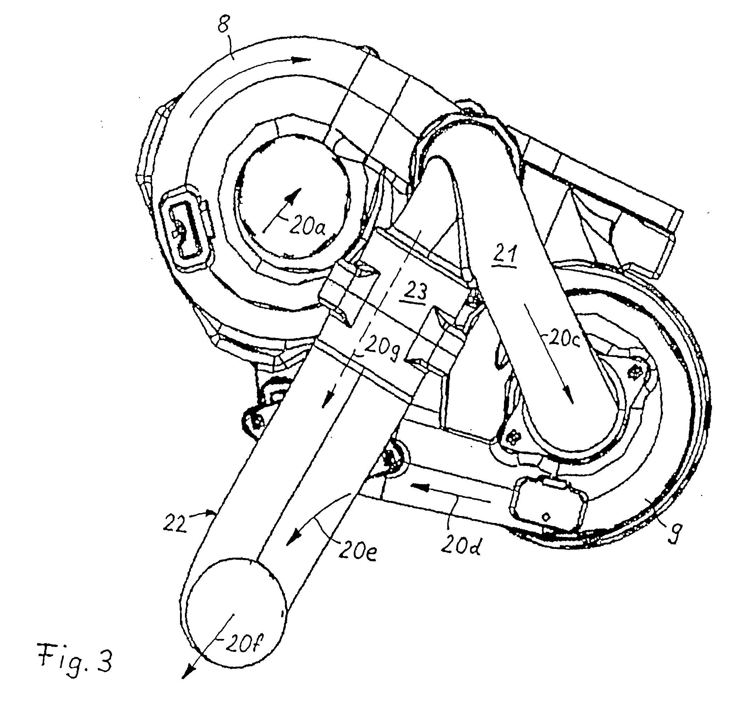

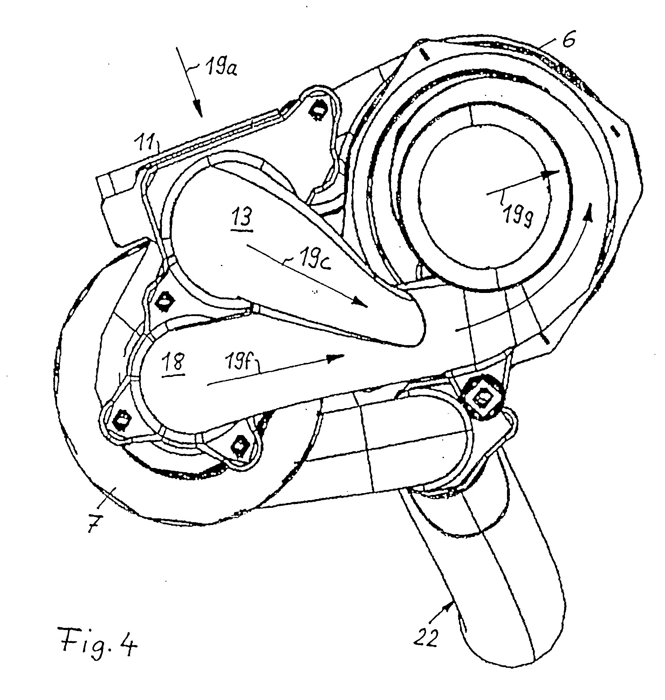

Bei dem in den Fig. 1 bis 6 dargestellten Ausführungsbeispiel sind gleiche Bauteile mit gleichen Bezugszeichen versehen.

Die in den Fig. 1 bis 6 dargestellte Turbolader-Einrichtung 1 für eine Brennkraftmaschine besteht aus zwei unterschiedlich groß dimensionierten Abgasturboladern 2, 3, die über diverse Luft- und Abgas- Verbindungskanäle zusammengekoppelt sind. Die beiden Abgasturbolader 2, 3 weisen parallele Achsen 4, 5 auf. Die beiden Abgasturbolader 2, 3 umfassen jeweils eine vom Abgas der Brennkraftmaschine antreibbare Turbine 6, 7 sowie einen von der zugeordneten, rotierenden Turbine angetriebenen Verdichter 8, 9 auf, welche angesaugte Frischluft auf einen erhöhten Ladedruck verdichten.

Die Turbine 7 des kleineren Abgasturboladers 3, der durch einen geringeren Massendurchsatz und eine kleinere Leistungsabgabe charakterisiert ist, zugleich aber eine geringere Trägheit aufweist und dadurch bereits bei niedrigeren Motordrehzahlen eine nennenswerte Ladedruckerhöhung ermöglicht, weist an seinem Turbinengehäuse 10 einen Anschlussflansch 11 für die Verbindung der Turbolader-Einrichtung 1 mit der Brennkraftmaschine auf. Der Anschlussflansch 11 ist mit einer Einströmöffnung eines Abgas-Einströmkanals 12 versehen, wobei der Anschlussflansch 11 in der Weise an der Brennkraftmaschine befestigt wird, dass der Abgasauslass der Brennkraftmaschine mit dem Abgas-Einströmkanal 12 kommunizieren kann. Weiterhin sind am Turbinengehäuse 10 des kleinen Abgasturboladers 3 ein erster Abgas-Kanalabschnitt 13 sowie ein zweiter Abgas-Kanalabschnitt 14 vorgesehen, wobei beide Kanalabschnitte 13, 14 mit dem Abgas-Einströmkanal 12, der vom Anschlussflansch 11 abzweigt, verbunden sind. Der erste Abgas-Kanalabschnitt 13 führt vom Einströmkanal 12 unmittelbar zur Turbine 6 des großen Abgasturboladers 2, der zweite Abgas-Kanalabschnitt 14 führt unmittelbar vom Einströmkanal 12 zur Turbine 7 des kleinen Abgasturboladers 3. Im Bereich der Verzweigung vom Einströmkanal 12 zu den beiden Kanalabschnitten 13, 14 ist ein vom Anschlussflansch 11 überdecktes Stellorgan 15 angeordnet, das geregelt oder gesteuert einstellbar ausgebildet ist und über das die Abgasströmung durch wenigstens einen Kanalabschnitt 13, 14 präzise einstellbar ist. Das Stellorgan ist beispielsweise als Stellklappe oder Stellventil ausgebildet.

In einer zweckmäßigen Ausführung ist zumindest der Abgasstrom durch den Kanalabschnitt 13, welcher zur Turbine 6 des großen Abgasturboladers 2 führt, über das Stellorgan 15 mit hinreichender Genauigkeit einstellbar.

Das Turbinengehäuse 10 umfasst weiterhin ein Klappengehäuse 16, in welchem das vorzugsweise als Stellklappe ausgebildete Stellorgan 15 aufgenommen ist. Das Klappengehäuse 16 ist von einem abnehmbaren Anschlussdeckel 17 verschlossen, der zum einen flanschartig mit dem Kanalabschnitt 13 für die Zufuhr des Abgases zum großen Abgasturbolader 2 und zum andern mit einem Überführungskanal 18 verbunden ist, welcher den Auslass der kleinen Turbine 7 mit dem Einlass der großen Turbine 6 verbindet.

Im Folgenden wird die Abgasführung durch die Turbolader-Einrichtung 1 beschrieben. Das Abgas der Brennkraftmaschine strömt in Pfeilrichtung 19a durch die Einströmöffnung im Anschlussflansch 11 in den Abgas-Einströmkanal 12. In Abhängigkeit des Aufbaus und der Stellung des Stellorgans 15 im Einströmkanal 12 wird das Abgas entweder in Pfeilrichtung 19b, 19c durch den Kanalabschnitt 13 abgeleitet, über den das Abgas der großen Turbine 6 zuführbar ist, oder in Pfeilrichtung 19d, 19e durch den Kanalabschnitt 14 geleitet, über den das Abgas der kleinen Turbine 7 zuführbar ist. Im letzteren Fall wird das Abgas nach Durchströmen der kleinen Turbine 7 in Pfeilrichtung 19f durch den Überführungskanal 18 der großen Turbine 6 zugeführt.

Bei kleiner Last bzw. kleinen Drehzahlen ist das Stellorgan 15 zweckmäßig in der Weise eingestellt, dass das Abgas in Pfeilrichtung 19a, 19d, 19e, 19f zunächst die kleine Turbine 7 und anschließend die in Reihe geschaltete große Turbine 6 durchströmt. Bei dieser Abgasführung reicht der vergleichsweise geringe Abgasgegendruck zum Beschleunigen der kleinen Turbine 7 aus; die verbleibende Restenergie des Abgases kann dazu genutzt werden, die Turbine 6 des großen Abgasturboladers 2 bereits auf Drehungen zu bringen. Bei höheren Lasten bzw. höheren Drehzahlen wird das Stellorgan 15 zweckmäßig in der Weise eingestellt, dass das Abgas in Pfeilrichtung 19a, 19b, 19c über den Einströmkanal 12 und den Kanalabschnitt 13 unter Umgehung der kleinen Turbine 7 unmittelbar der großen Turbine 6 zugeführt wird.

Gemäß einer weiteren Ausführung kann es aber auch angezeigt sein, das Stellorgan in der Weise auszubilden, dass dieses bei hohen Lasten bzw. Drehzahlen eine Position einnehmen kann, in welcher das Abgas sowohl über den Kanalabschnitt 13 unmittelbar der großen Turbine 6 als auch über den Kanalabschnitt 14 unmittelbar der kleinen Turbine 7 zugeführt werden kann. Diese Ausführung hat den Vorteil, dass die kleine Turbine 7 permanent auf Drehzahlen gehalten wird und auch einen zusätzlichen Beitrag zur Verdichtung der Ladeluft leisten kann.

Nach dem Durchströmen der großen Turbine 6 wird das Abgas aus dieser in Pfeilrichtung 19g abgeleitet und im weiteren Verlauf einem Katalysator zugeführt.

Die Luftführung der angesaugten und verdichteten Frischluft durch die Verdichter 8 und 9 des großen Abgasturboladers 2 bzw. kleine Abgasturbolator 3 verläuft wie folgt: In Pfeilrichtung 20a wird Umgebungsluft dem großen Verdichter 8 zugeführt, von diesem vorverdichtet, in Pfeilrichtung 20b, 20c durch einen ersten Luftführungskanal zwischen Verdichteraustritt des großen Verdichters 8 und Verdichtereintritt des kleinen Verdichters 9 dem letzteren zugeführt, von diesem auf den Ladedruck verdichtet und über einen weiteren Luftführungskanal 22 mit einem verdichternahen, unmittelbar am Verdichteraustritt gelegenen Abschnitt 22a und einem verdichterfernen Abschnitt 22b in Pfeilrichtung 20d, 20e, 20f dem Einlass der Brennkraftmaschine zugeführt.

Es kann zweckmäßig sein, einen Bypass-Kanal 23 vorzusehen, über den der erste Luftführungskanal 21 und der zweite Luftführungskanal 22 zu verbinden sind, wobei im Bypass-Kanal 23 ein einstellbares Bypassventil zum Öffnen und Schließen des Durchtrittquerschnitts des Bypass-Kanals angeordnet ist. Wird der Bypass-Kanal 23 geöffnet, so strömt die im großen Verdichter 8 verdichtete Luft unmittelbar aus dem Verdichter 8 über den Bypass-Kanal 23 in den letzten Abschnitt 22b des zweiten Luftführungskanals 22 und wird über diesen als Ladeluft unmittelbar der Brennkraftmaschine zugeleitet.

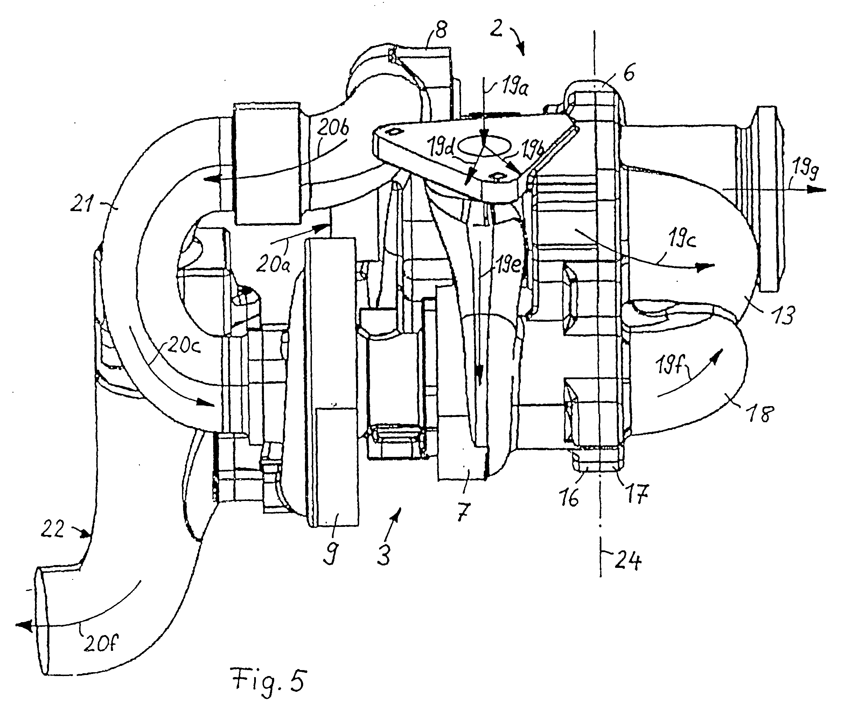

Der Anschlussflansch 11 mit dem Abgas-Einströmkanal 12 sowie dem Stellorgan 15 bildet zweckmäßig eine vormontierte Baueinheit, die Teil des Turbinengehäuses 10 ist bzw. am Turbinengehäuse 10 zu befestigen ist. Darüber hinaus kann es vorteilhaft sein, auch das Klappengehäuse 16 einschließlich dem Anschlussdeckel 17 und gegebenenfalls den beiden Kanalabschnitten 13 und 14 als Baueinheit auszubilden, welche insbesondere mit dem aus Anschlussflansch 11, Einströmkanal 12 und Stellorgan 15 gebildeten System eine gemeinsame Baueinheit bilden kann. Wie insbesondere Fig. 5 zu entnehmen liegt der Anschlussdeckel 17 mit dem Kanalabschnitt 13 und dem Überführungskanal 18 in einer Ebene 24 mit dem Klappengehäuse 16.

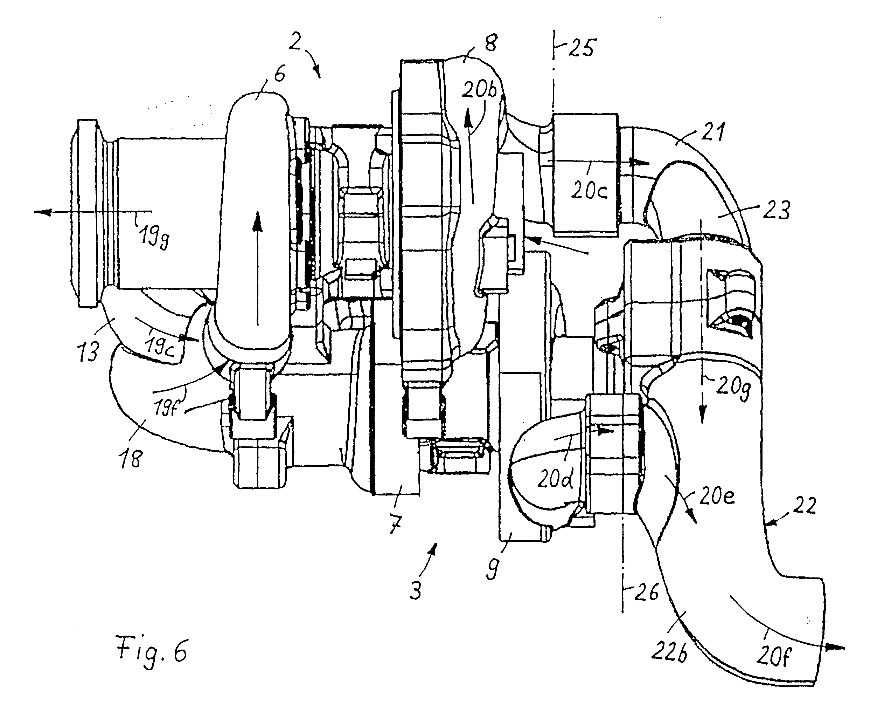

Fig. 6 ist darüber hinaus zu entnehmen, dass die Anschlüsse der Luftführungskanäle 21 und 22 an den Verdichtern 8 bzw. 9 in parallel versetzten Ebenen 25 und 26 liegen.

## Patentansprüche

1. Turbolader-Einrichtung für eine Brennkraftmaschine, mit zwei Abgasturboladern (2, 3), deren Turbinen (6, 7) vom Abgas der Brennkraftmaschine antreibbar sind und deren Verdichter (8, 9) Verbrennungsluft der Brennkraftmaschine auf einen erhöhten Ladedruck komprimieren, mit einem im Strömungsweg des Abgases angeordneten Stellorgan (15) zur einstellbaren Zufuhr von Abgas zu einer der Turbinen (6, 7) oder zu beiden Turbinen (6, 7), wobei ein gemeinsamer Abgas-Einströmkanal (12) für beide Turbinen (6, 7) vorgesehen ist, wobei von dem Abgas-Einströmkanal (12) zwei Abgas-Kanalabschnitte (13, 14) für die Abgaszufuhr zu jeder Turbine (6, 7) abzweigen und wobei das Stellorgan (15) in der Abzweigung der Abgas-Kanalabschnitte (13, 14) vom Abgas-Einströmkanal (12) angeordnet ist,
**dadurch gekennzeichnet, dass** der gemeinsame Abgas-Einströmkanal (12) und das Stellorgan (15) in das Turbinengehäuse (10) eines der Abgasturbolader (2, 3) oder in einem Teil eines gemeinsamen Gehäuses beider Abgasturbolader (2,3) integriert sind und dass das Turbinengehäuse (10) einen Anschlussflansch (11) zum Anschluss an einen Abgasauslass der Brennkraftmaschine aufweist, wobei der eine Abgaskanalabschnitt (13) im Bereich des Anschlussflansches (11) angeordnet ist.

2. Turbolader-Einrichtung nach Anspruch 1,
**dadurch gekennzeichnet, dass** die beiden Abgasturbolader (2, 3) parallele Achsen (4, 5) aufweisen.

3. Turbolader-Einrichtung nach einem der Ansprüche 1 oder 2,
**dadurch gekennzeichnet, dass** die beiden Abgasturbolader (2, 3) unterschiedlich groß ausgebildet sind.

4. Turbolader-Einrichtung nach Anspruch 3,
**dadurch gekennzeichnet, dass** das Stellorgan (15) in der Weise schaltbar ist, dass bei kleinen Lasten bzw. Drehzahlen der dem größeren Abgasturbolader (2) zugeordnete Kanalabschnitt (13) gesperrt ist und bei hohen Lasten bzw. Drehzahlen der dem größeren Abgasturbolader (2) zugeordnete Kanalabschnitt (13) geöffnet ist.

5. Turbolader-Einrichtung nach Anspruch 3 oder 4,
**dadurch gekennzeichnet, dass** der Abgas-Einströmkanal (12), die zwei Abgas-Kanalabschnitte (13, 14) und das Stellorgan (15) in das Turbinengehäuse (10) des kleinen Abgasturboladers (3) integriert sind.

6. Turbolader-Einrichtung nach einem der Ansprüche 1 bis 5,
**dadurch gekennzeichnet, dass** ein Bypass-Kanal (23) mit einem Bypassventil zwischen einem ersten Luftführungskanal (21) zwischen Verdichteraustritt des ersten Verdichters (8) und Verdichtereintritt des zweiten Verdichters (9) und einem zweiten Luftführungskanal (22) am Verdichteraustritt des zweiten Verdichters (9) vorgesehen ist.

7. Turbolader-Einrichtung nach einem der Ansprüche 1 bis 6,
**dadurch gekennzeichnet, dass** die beiden Luftführungskanäle (21, 22) zwischen Verdichteraustritt des ersten Verdichters (8) und Verdichtereintritt des zweiten Verdichters (9) bzw. am Verdichteraustritt des zweiten Verdichters (9) ein austauschbares Modul bilden.

8. Turbolader-Einrichtung nach einem der Ansprüche 1 bis 7,
**dadurch gekennzeichnet, dass** der Verdichteraustritt des ersten Verdichters (8) und der Verdichtereintritt des zweiten Verdichters (9) in parallelen Ebenen (24, 25, 26) liegen.

9. Turbolader-Einrichtung nach einem der Ansprüche 1 bis 8,
**dadurch gekennzeichnet, dass** ein Verbindungskanal zwischen den beiden Luftführungskanälen (21, 22) zwischen Verdichteraustritt des ersten Verdichters (8) und Verdichtereintritt des zweiten Verdichters (9) bzw. am Verdichteraustritt des zweiten Verdichters (9) vorgesehen ist.

## Claims

1. Turbocharger apparatus for an internal combustion engine, said turbocharger having two exhaust-gas turbochargers (2, 3) whose turbines (6, 7) can be driven by the exhaust gas of the internal combustion engine and whose compressors (8, 9) compress combustion air from the internal combustion engine to an elevated charging pressure, and having a regulating unit (15) for adjustably feeding exhaust gas to one of the turbines (6, 7) or to both turbines (6, 7), wherein a common exhaust-gas inflow duct (12) for both the turbines (6, 7) is provided, wherein two exhaustgas duct sections (13, 14) for feeding exhaust gas to each turbine (6, 7) branch off from said exhaust-gas inflow duct (12), and wherein the regulating unit (15) is disposed in the bifurcation of the exhaust-gas duct sections (13, 14) from the exhaust-gas inflow duct (12),
**characterised in that**
the common exhaust-gas inflow duct (12) and the regulating unit (15) are integrated into the turbine housing (10) of one of the exhaust-gas turbochargers (2, 3) or in part of a common housing of the two exhaust-gas turbochargers (2, 3), and that the turbine housing (10) has a connecting flange (11) for connection to an exhaust-gas outlet of the internal combustion engine, one exhaust-gas duct section (13) being disposed in the region of said connecting flange (11).

2. Turbocharger apparatus according to claim 1,
**characterised in that** the two exhaust-gas turbochargers (2, 3) have parallel axes (4, 5).

3. Turbocharger apparatus according to one of claims 1 or 2,
**characterised in that** the two exhaust-gas turbochargers (2, 3) are constructed so as to be of different size.

4. Turbocharger apparatus according to claim 3,
**characterised in that** the regulating unit (15) can be switched in such a way that, at low loads or rotational speeds, the duct section (13) associated with the larger exhaust-gas turbocharger (2) is blocked and, at high loads or rotational speeds, the duct section (13) associated with the larger exhaust-gas turbocharger (2) is open.

5. Turbocharger apparatus according to claim 3 or 4,
**characterised in that** the exhaust-gas inflow duct (12), the two exhaust-gas duct sections (13, 14) and the regulating unit (15) are integrated into the turbine housing (10) of the small exhaust-gas turbocharger (3).

6. Turbocharger apparatus according to one of claims 1 to 5,
**characterised in that** a bypass duct (23) with a bypass-valve is provided between a first air-guiding duct (21) between the exit from the first compressor (8) and the entry to the second compressor (9) and a second air-guiding duct (22) at the exit from said second compressor (9).

7. Turbocharger apparatus according to one of claims 1 to 6,
**characterised in that** the two air-guiding ducts (21, 22) between the exit from the first compressor (8) and the entry to the second compressor (9) and at the exit from said second compressor (9) form a replaceable module.

8. Turbocharger apparatus according to one of claims 1 to 7,
**characterised in that** the exit from the first compressor (8) and the entry to the second compressor (9) lie in parallel planes (24, 25, 26).

9. Turbocharger apparatus according to one of claims 1 to 8,
**characterised in that** a connecting duct is provided between the two air-guiding ducts (21, 22) between the exit from the first compressor (8) and the entry to the second compressor (9) and at the exit from the second compressor (9).

## Revendications

1. Dispositif turbocompresseur pour un moteur à combustion interne, comprenant deux turbocompresseurs entraînés par les gaz d'échappement (2, 3), dont les turbines (6, 7) sont susceptibles d'être entraînées par les gaz d'échappement du moteur à combustion interne et dont les compresseurs (8, 9) compriment l'air de combustion du moteur à combustion interne, à une pression de suralimentation augmentée, avec un organe de réglage (15) disposé dans la voie d'écoulement des gaz d'échappement, afin d'obtenir un apport réglable de gaz d'échappement à l'une des turbines (6, 7) ou aux deux turbines (6, 7), sachant qu'un canal d'entrée d'écoulement de gaz d'échappement (12) commun est prévu pour les deux turbines (6, 7), sachant que, du canal d'entrée des commandes de gaz d'échappement (12) se ramifient deux tronçons de canaux de gaz d'échappement (13, 14) pour l'amenée des gaz d'échappement à chaque turbine (6, 7), et l'organe de réglage (15) étant disposé dans la ramification des tronçons de canaux de gaz d'échappement (13, 14) venant du canal d'admission de gaz d'échappement (12),
**caractérisé en ce que** le canal d'admission de gaz d'échappement (12) commun et l'organe de réglage (15) sont intégrés dans le carter de turbine (10) d'un des turbocompresseurs entraînés par les gaz d'échappement (2, 3), ou dans une partie d'un carter commun des deux turbocompresseurs entraînés par les gaz d'échappement (2, 3), et **en ce que** le carter de turbine (10) présente une bride de raccordement (11) pour le raccordement à une évacuation des gaz d'échappement du moteur à combustion interne, un tronçon de canal de gaz d'échappement (13) étant disposé dans la zone de la bride de raccordement (11).

2. Dispositif turbocompresseur selon la revendication 1, **caractérisé en ce que** les deux turbocompresseurs entraînés par les gaz d'échappement (2, 3) ont des axes (4, 5) parallèles.

3. Dispositif turbocompresseur selon l'une des revendications 1 ou 2, **caractérisé en ce que** les deux turbocompresseurs entraînés par les gaz d'échappement (2, 3) sont de grosseur différente.

4. Dispositif turbocompresseur selon la revendication 3, **caractérisé en ce que** l'organe de réglage (15) est susceptible d'être commuté de manière que, pour les petites charges ou les petites vitesses de rotation, le tronçon de canal (13) associé au turbocompresseur de gaz d'échappement (2) le plus gros soit fermé, et que, pour les charges ou les vitesses de rotation élevées, le tronçon de canal 13 associé au turbocompresseur entraîné par les gaz d'échappement (2) le plus gros soit ouvert.

5. Dispositif turbocompresseur selon la revendication 3 ou 4, **caractérisé en ce que** le tronçon d'admission de gaz d'échappement (12), les deux tronçons de canal de gaz d'échappement (13, 14) et l'organe de réglage (15) sont intégrés dans le carter de turbine (10) du petit turbocompresseur entraîné par les gaz d'échappement (3).

6. Dispositif turbocompresseur selon l'une des revendications 1 à 5, **caractérisé en ce qu'**un canal de dérivation (23) muni d'une soupape de dérivation est prévu entre un premier canal d'amenée d'air (21), entre la sortie de compresseur du premier compresseur (8) et l'entrée de compresseur du deuxième compresseur (9), et un deuxième canal d'amenée d'air (22) est prévu sur la sortie de compresseur du deuxième compresseur (9).

7. Dispositif turbocompresseur selon l'une des revendications 1 à 6, **caractérisé en ce que** les deux canaux d'amenée d'air (21, 22), entre la sortie de compresseur du premier compresseur (8) et l'entrée de compresseur du deuxième compresseur (9), ou à la sortie de compresseur du deuxième compresseur (9), forment un module remplaçable.

8. Dispositif turbocompresseur selon l'une des revendications 1 à 7, **caractérisé en ce que** la sortie de compresseur du premier compresseur (8) et l'entrée de compresseur du deuxième compresseur (9) sont situés dans des plans (24, 25, 26) parallèles.

9. Dispositif turbocompresseur selon l'une des revendications 1 à 8, **caractérisé en ce qu'**un canal de liaison est prévu entre les deux canaux d'amenée d'air (21, 22), entre la sortie de compresseur du premier compresseur (8) et l'entrée de compresseur du deuxième compresseur (9), ou à la sortie de compresseur du deuxième compresseur (9).
